Europäisches Patentamt

European Patent Office

Office européen des brevets

(19)

(11) Veröffentlichungsnummer: **0 252 461**
**B1**

(12) **EUROPÄISCHE PATENTSCHRIFT**

(45) Veröffentlichungstag der Patentschrift:
11.04.90

(51) Int. Cl.⁴: **B65G 47/30**

(21) Anmeldenummer: **87109655.8**

(22) Anmeldetag: **04.07.87**

(54) **Anordnung zum Umformen eines angeförderten mehrspurigen Flaschenstromes in einen abzufördernden einspurigen Flaschenstrom.**

(30) Priorität: **05.07.86 DE 3622700**
**13.05.87 DE 3715923**

(43) Veröffentlichungstag der Anmeldung:
**13.01.88 Patentblatt 88/2**

(45) Bekanntmachung des Hinweises auf die Patenterteilung:
**11.04.90 Patentblatt 90/15**

(84) Benannte Vertragsstaaten:
**AT CH DE ES FR GB IT LI NL**

(56) Entgegenhaltungen:
**AT-B- 357 476**
**CH-A- 605 353**
**DE-A- 2 745 640**
**DE-A- 3 025 951**

(73) Patentinhaber: **Seitz Enzinger Noll Maschinenbau Aktiengesellschaft, Neckarauer Strasse 140-162 Postfach 645, D-6800 Mannheim 1(DE)**

(72) Erfinder: **Born, Gerhard, Don-Bosco-Strasse 16, D-6530 Bingen (Rhein)(DE)**
Erfinder: **Conrad, Walter, Hauptstrasse 21, D-6761 Lettweiler(DE)**
Erfinder: **Elsner, Paul, Alzeyer Strasse 115, D-6550 Bad Kreuznach(DE)**
Erfinder: **Ullrich, Volker, Frankenstrasse 9, D-6556 Wöllstein(DE)**

**Beschreibung**

Die Erfindung bezieht sich auf eine Anordnung zum Umformen eines angeförderten mehrspurigen Flaschenstroms in einen abzufördernden einspurigen Flaschenstrom gemäß Oberbegriff Patentanspruch 1.

Eine Anordnung dieser Art ist bekannt (DE-OS 34 45 543) und findet z.B. dort Anwendung, wo Flaschen in einem mehrspurigen Flaschenstrom angefördert werden und zur Weitergabe an eine Flaschenbehandlungsmaschine, beispielsweise an eine Etikettier- oder Flaschenfüllmaschine in einen einspurigen Flaschenstrom umgeformt werden müssen. Die bekannte Anordnung besitzt heirfür einen Zuförderer zum Anfördern des mehrspurigen Flaschenstromes, einen Zwischenförderer sowie einen Abförderer, über welch letzteren der einspurige Flaschenstrom abgefördert wird. Sämtliche Förderer sind jeweils von Förderbändern in Form von in sich geschlossenen und endlos umlaufenden Scharnierbandketten gebildet, wobei die Anordnung so getroffen ist, daß sich an das in Förderrichtung hintere Ende des Zuförderers sowohl das in Förderrichtung vordere Ende des von mehreren, quer zur Förderrichtung nebeneinander angeordneten Förderbändern gebildeten Zwischenförderers als auch des von einem einzigen Förderband gebildeten Abförderers unmittelbar anschließt, der Abförderer mit seinen in Förderrichtung vorderen Eingangsbereich also in Richtung quer zur Förderrichtung neben dem Zwischenförderer angeordnet ist. Die Förderbänder des Zwischenförderers und des Abförderers liegen mit ihren oberen Längen in diesem Eingangsbereich bündig nebeneinander und bilden eine gemeinsame Standfläche, die als Umformbereich zum Umformen des mehrspurigen Flaschenstroms in den einspurigen Flaschenstrom dient. An dem gemeinsamen Übergangsbereich zwischen den Zuförderer und dem Zwischenförderer sowie Abförderer ist bei der bekannten Anordnung wenigstens ein ortsfestes Übergangsblech in Form eines Gleitbleches vorgesehen, welches einen Übergang zwischen der Standfläche des Zuförderers und dem Umformbereich in der Form bildet, daß sich für die Flaschen nach dem Passieren des Gleitbleches eine Auflockerung des Flaschenstromes sowohl auf dem Zwischenförderer als auch auf dem Abförderer in dessen Eingangsbereich ergibt, so daß zur Bildung des einspurigen Flaschenstroms die auf dem Zwischenförderer stehenden Flaschen sich jeweils in Lücken zwischen den auf dem Abförderer stehenden Flaschen hineinbewegen können. Diese bekannte Anordnung zeichnet sich zwar im Vergleich zu anderen ebenfalls bekannten Anordnungen durch eine Verringerung des konstruktiven Aufwandes sowie durch einen wesentlich reduzierten Lärmpegel beim Umformen des mehrspurigen Flaschenstromes in den einspurigen Flaschenstrom aus. Die Leistung dieser bekannten Anordnung, d.h. die Anzahl der in Zeiteinheit angeförderten und abgeförderten Flaschen ist jedoch begrenzt.

Aufgabe der Erfindung ist es, eine Anordnung der eingangs geschilderten Art dahingehend weiterzubilden, daß sie unter Beibehaltung der grundsätzlichen Vorteile der gattungsmäßigen Anordnung eine höhere Leistung ermöglicht.

Zur Lösung dieser Aufgabe ist eine Anordnung entsprechend dem kennzeichnenden Teil des Patentanspruches 1 ausgebildet.

Ein wesentlicher konstruktiver Unterschied zwischen der erfindungsgemäßen Anordnung und der bekannten Anordnung der gatungsmäßigen Art besteht darin, daß in Förderrichtung der Zwischenförderer spurgleich an den Zuförderer und der Abförderer spurgleich an den Zwischenförderer anschließen, und daß am Übergangs- bzw. Anschlußbereich, zwischen dem Zuförderer und dem Zwischenförderer, aber auch am Übergangs- bzw. Anschlußbereich zwischen dem Zwischenförderer und dem Abförderer wenigstens ein Übergangsblech vorgesehen ist.

Dieses Übergangsblech im Anschlußbereich zwischen dem Zwischenförderer und dem Abförderer ist bei der Erfindung beispielsweise ein Gleitblech, welches niveaugleich oder in etwa niveaugleich mit der Standfläche des Zwischenförderers und des Abförderers liegt bzw. einen Übergang zwischen den Standflächen der sich in Förderrichtung aneinander anschließenden Förderer bildet.

Bei einer Ausführung, bei der der Zwischenförderer wenigstens zwei Förderbänder aufweist, an die sich die wenigstens zwei Förderbänder des Abförderers anschließen und die eine Breite kleiner als der Durchmesser der Flaschen besitzen, können die Übergangsbleche zwischen dem Zwischenförderer und dem Abförderer auch etwas tiefer als die Standflächen des Zwischenförderers und Abförderers angeordnet sein, und zwar dann, wenn wenigstens ein Übergang zwischen einem Förderband des Zwischenförderers und dem sich anschließenden Förderband des Abförderers sowie ein weiterer quer zur Förderrichtung unmittelbar benachbarter Übergang zwischen einem Förderband und dem sich anschließenden Förderband des Abförderers in Förderrichtung gegen einander versetzt sind.

Die erfindungsgemäße Anordnung gestattet es, die Flaschen in einem im Vergleich zur bekannten Anordnung der gattungsmäßigen Art weit breiteren Flaschenstrom zuzuführen und nach zweimaligem Umformen in einem einspurigen Flaschenstrom sehr schnell abzuführen, wobei sich bei einer störungsfreien Arbeitsweise auch eine im Vergleich zur bekannten Anordnung der gattungsmäßigen Art weit höhere Leistung bei geringem Geräuschpegel ergibt.

Vorteilhafte Weiterbildungen der Erfindung sind Gegenstand der Unteransprüche.

Die Erfindung wird im folgenden anhand der Figuren an Ausführungsbeispielen näher erläutert. Es zeigen:

Fig. 1 in schematischer Darstellung und in Draufsicht eine erste Ausführungsform der erfindungsgemäßen Anordnung zum Umformen von Flaschenreihen;

Fig. 2 in schematischer Darstellung einen Schnitt entsprechend der Linie I-I der Fig. 1 durch den Zwischenförderer der Anordnung gemäß Fig. 1;

Fig. 3 in schematischer Darstellung einen Schnitt

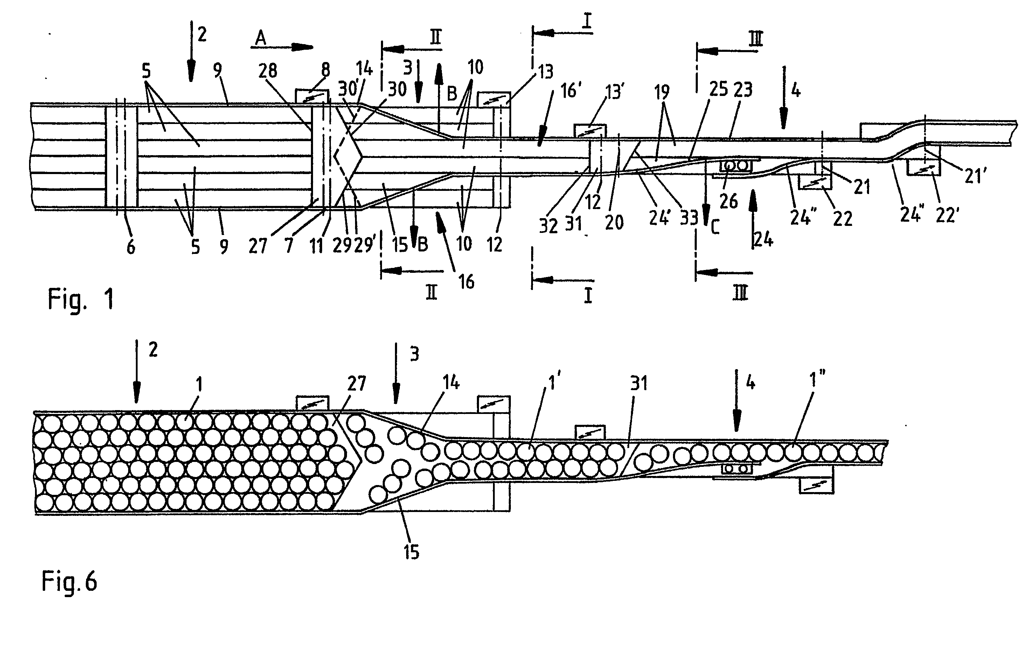

entsprechend der Linie II-II der Fig. 1 durch den Zwischenförderer der Anordnung gemäß Fig. 1;

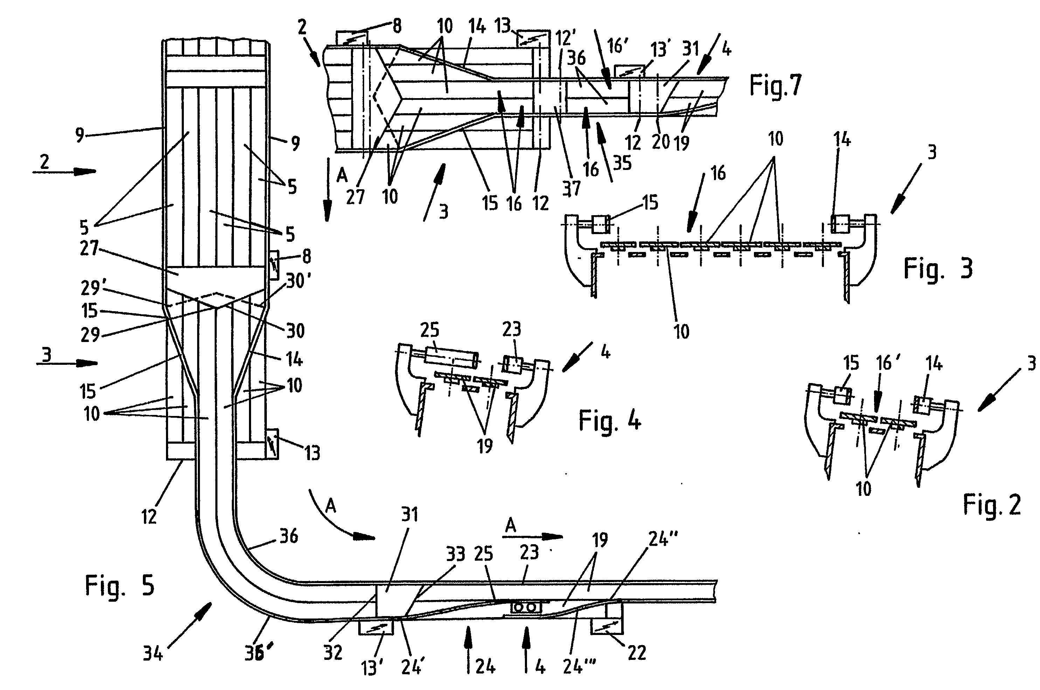

Fig. 4 in schematischer Darstellung einen Schnitt entsprechend der Linie III-III der Fig. 1 durch den Abförderer der Anordnung nach Fig. 1;

Fig. 5 in schematischer Darstellung und in Draufsicht eine weitere Ausführungsform der erfindungsgemäßen Anordnung zum Umformen von Flaschenreihen;

Fig. 6 eine Darstellung ähnlich Fig. 1 zur Erläuterung des Flaschenflusses bzw. des drucklosen Zusammenführens der Flaschen an den am Zwischenförderer sowie am Abförderer gebildeten Umformbereichen;

Fig. 7 eine Abwandlung des in Fig. 1 dargestellten Zwischenförderers.

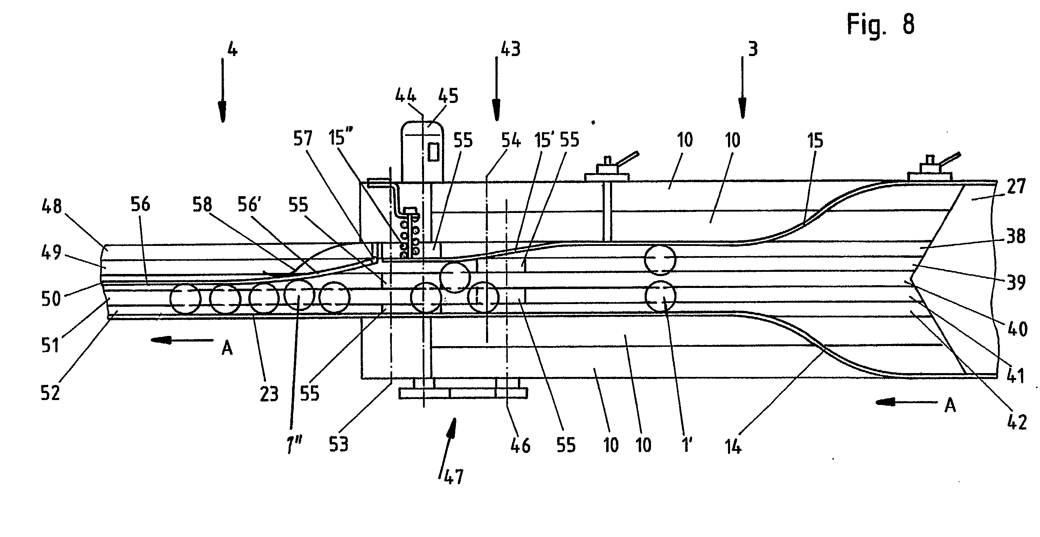

Fig. 8 in schematischer Darstellung und in Draufsicht eine weitere Ausführungsform der erfindungsgemäßen Anordnung zum Umformen von Flaschenreihen.

Die in den Fig. 1 bis 4 dargestellte Ausführungsform der erfindungsgemäßen Anordnung besteht im wesentlichen aus drei in Förderrichtung (Pfeil A) der angeförderten Flaschen 1 aneinander anschließenden, unabhängigen Förderstrecken, von denen die in Förderrichtung A erste Förderstrecke der auch als Dosierstrecke ausgebildete Zuförderer 2, die sich daran in Förderrichtung A anschließende Förderstrecke der Zwischenförderer 3 und die sich an diesen in Förderrichtung A anschließende Förderstrecke der Abförderer 4 sind. Die Flaschen 1 werden, wie die Fig. 6 zeigt, der Anordnung bei der für die Fig. 1 und 6 gewählten Darstellung von links mehrspurig zugeführt, wobei die jeweils aufrecht stehenden, d.h. mit ihrer Hochachse in vertikaler Richtung angeordneten Flaschen 1 auf dem Zuförderer 2 quer zur Förderrichtung A sechs Reihen bilden und die Flaschen 1 jeder Reihe gegenüber den Flaschen der benachbarten Reihe derart versetzt sind, daß senkrecht zur Förderrichtung A eine Flasche 1 einer Reihe der zwischen zwei Flaschen 1 einer benachbarten Reihe gebildeten Lücke umittelbar gegenüberliegt, die Flaschen 1 von Reihe zu Reihe also "auf Lücke versetzt" angeordnet sind.

Mit Hilfe des Abförderers 4 werden, wie die Fig. 6 ebenfalls zeigt, die umgeformten Flaschen 1″ bei der für die Fig. 1 und 6 gewählten Darstellung an der rechten Seite der Anordnung schließlich als einspuriger Flaschenstrom Abgeführt, in welchem die Flaschen 1″ nur noch in Förderrichtung unmittelbar aneinander anschließend vorgesehen sind. Das Umformen des auf dem Zuförderer 2 angeförderten mehrspurigen Flaschenstroms in den am Ausgang des Abförderers 4 abgeführten einspurigen Flaschenstrom erfolgt bei der dargestellten Anordnung zum Teil im Bereich des Zwischenförderers 3, an dessen in Förderrichtung A hinterem Ende bzw. Ausgang der ursprünglich sechs Flaschenreihen aufweisende Flaschenstrom in einen Flaschenstrom mit zwei Reihen umgeformt ist, und abschließend im Bereich des in Förderrichtung A vorderen Endes bzw. des Eingangs des Abförderers 4.

Bei der dargestellten Ausführungsform ist der Zuförderer 2 von sechs parallel zueinander und senkrecht zur Förderrichtung A nebeneinander angeordneten Förderbändern 5 gebildet, die jeweils in sich geschlossene Scharnierbandketten sind und endlos umlaufen. Zumindest mit ihren oberen, sich in Förderrichtung A erstreckenden Längen liegen die Förderbänder 5 quer zur Förderrichtung A bündig nebeneinander, und zwar derart, daß die oberen Oberflächenseiten dieser oberen Längen sämtlicher Förderbänder 5 in einer gemeinsamen, bei der dargestellten Ausführungsform horizontalen Ebene liegen und somit eine gemeinsame horizontale Standfläche bilden, auf der die angeförderten Flaschen 1 mit ihrem Boden aufstehen. Am in Förderrichtung A vorderen Ende (Eingang) sowie an dem in Förderrichtung A hinteren Ende (Ausgang) sind die Förderbänder 5 jeweils über Umlenkräder bzw. -rollen 6 bzw. 7 geführt, die um eine horizontale, senkrecht zur Förderrichtung A verlaufende Achse drehbar gelagert sind und von denen die Umlenkrollen 7, die mit den Förderbändern 5 antriebsmäßig in Eingriff stehen, zum Antreiben der Förderbänder 5 mit einem regelbaren elektrischen Antriebsmotor 8 antriebsmäßig verbunden sind. An den beiden Längsseiten des Zuförderers 2 ist jeweils ein starres Führunsgeländer 9 für die Flaschen 1 vorgesehen, wobei der Abstand, den die beiden Führungsgeländer 9 in Richtung senkrecht zur Förderrichtung A aufweisen, die Spurbreite des Zuförderers 2 festlegt.

Der Zwischenförderer 3 besteht bei der dargestellten Ausführungsform ebenfalls aus sechs parallel zueinander und senkrecht zur Förderrichtung A nebeneinander angeordneten Förderbändern 10, die wiederum von in sich geschlossenen Scharnierbandketten gebildet sind und endlos umlaufen. Wesentlich ist, daß bei gleicher Breite der verwendeten Förderbänder die Anzahl der Förderbänder 10 des Zwischenförderers 3 gleich der Anzahl der Förderbänder 5 des Zuförderers 2 ist, daß die Förderbänder 10 jedoch vollständig getrennt von den Förderbändern 5 sind. Zumindest mit ihren oberen, in Förderrichtung A verlaufenden Längen sind die Förderbänder 10 wiederum senkrecht zur Förderrichtung A bündig nebeneinander liegend angeordnet, so daß diese oberen Längen der Förderbänder 10 mit ihren jeweils oberen Seiten eine Standfläche bilden, auf der die Flaschen 1′ mit ihrem Boden aufstehen und die zumindest an dem in Förderrichtung A vorderen Ende (Eingang) des Zwischenförderers 3 niveaugleich mit der Standfläche des Zuförderers 2 liegt, so daß sich der Zwischenförderer 3 niveau- und spurgleich an den Zuförderer 2 anschließt.

Am Eingang sowie am Ausgang des Zwischenförderers 3 sind die Förderbänder 10 jeweils über Umlenkräder bzw. -rollen 11 bzw. 12 geführt, die um Achsen drehbar gelagert sind, die im wesentlichen parallel zu den Achsen der Umlenkrollen 6 und 7 verlaufen und von denen zumindest die Umlenkrollen 12 in die Förderbänder 10 eingreifen und zum Antrieb der Förderbänder 10 mit einem regelbaren Antriebsmotor 13 bzw. 13′ verbunden sind. Ebenso wie bei den Förderbändern 5 erfolgt auch der Antrieb der Förderbänder 10 selbstverständlich in der Weise, daß sich die oberen Längen dieser Förderbänder in Förderrichtung A bewegen, wobei es allerdings durch entsprechende Ausbildung des Antriebs für die Förderbänder 10, beispielsweise durch Verwendung mehrerer Antriebsmotoren oder entsprechender Getriebe möglich ist, daß die Förderbänder 10 entweder gleiche Fördergeschwindigkeit oder aber unterschiedliche Fördergeschwindigkeiten aufweisen, d.h. beispielsweise im letzten Fall die im mittleren Bereich des Zwischenförderers 3 vorgesehenen Förderbänder 10 eine etwas größere Fördergeschwindigkeit besitzen als die im Bereich der beiden Längsseiten des Zwischenförderers 3 angeordneten Förderbänder 10. Der Zwischenförderer 3 besitzt zwei Führungsgeländer 14 und 15 für die Flaschen 1', wobei die Führungsgeländer 14 und 15 am Eingang des Zwischenförderers 3 jeweils die Fortsetzung eines oder beiden Führungsgeländer 9 bilden, d.h. sich jeweils unmittelbar am Einführungsgeländer 9 anschließen und im Bereich zwischen dem Eingang und dem Ausgang des Zwischenförderes schräg zur Förderrichtung A in der Form verlaufen, daß sich der Abstand zwischen den Führungsgeländern 14 und 15 in Förderrichtung A verkleinert. Die Führungsgeländer 14 und 15 begrenzen somit zwischen sich eine sich in Förderrichtung A trichterartig verjüngende und vom Zuförderer 2 zum Abförderer führende Gasse für den Flaschenfluß, wobei die durch den Abstand der Führungsgeländer 14 und 15 festgelegte Spurbreite des Zwischenförderers 3 an dessen Ausgang dem zweispurigen bzw. zweireihigen Flaschenstrom entspricht. Die Führungsgeländer 14 und 15 sind starr ausgebildet. Zumindest in ihrem schräg zur Förderrichtung A verlaufenden Teilbereich können die Führungsgeländer 14 und 15 auch elastisch ausgebildet sein, d.h. zumindest in diesem Teilbereich können dann die Führungsgeländer 14 und 15 gegen die Wirkung einer Gegenkraft um einen bestimmten Betrag elastisch nach außen bewegt werden, wie dies mit den Pfeilen B in der Fig. 1 angedeutet ist, um ein ev. Verklemmen bzw. gegenseitiges Sichsperren der Flaschen 1' beim Umformen des Flaschenstroms auf dem Zwischenförderer 3 bzw. in dem von diesem Zwischenförderer 3 gebildeten Umformbereich mit Sicherheit zu vermeiden. Die erwähnte Gegenkraft ist entweder von der Eigenelastizität der Führungsgeländer 14 und 15 und/oder von äußeren, nicht näher dargestellten Federelementen usw. gebildet.

Bei der dargestellten Ausführungsform sind weiterhin die beiden mittleren Förderbänder 10 des Zwischenförderers 3 in Förderrichtung über die äußeren Förderbänder 10 hinaus verlängert, d.h. die von dem Antriebsmotor 13' angetriebenen Umlenkrollen 12 der beiden mittleren Förderbänder 10 liegen in Förderrichtung hinter den durch den Antriebsmotor 13 angetriebenen Umlenkrollen 12 für die äußeren Förderbänder 10. Hierdurch ist in dem sich an den trichterartig verjüngenden Bereich der Gasse anschließenden weiteren Bereich dieser von den Führungsgeländern 14 und 15 begrenzten Gasse die Standfläche 16 des Zwischenförderers 3 über eine Teillänge nur noch von zwei Förderbändern 10 gebildet, so daß auf dieser Teillänge eine Neigung der Standfläche 16 des Zwischenförderers 3 quer zur Förderrichtung A gegenüber der Horizontalen möglich ist, wie dies nachfolgend beschrieben ist.

Die Anordnung ist weiterhin so getroffen, daß bei der dargestellten Ausführungsform die die Standfläche 16 des Zwischenförderers 3 für die Flaschen 1' bildenden Oberseiten der oberen Längen der Förderbänder 10 am Eingang des Zwischenförderers 3 in einer gemeinsamen horizontalen Ebene liegen (Fig. 3). Auch am Ausgang, d.h. an dem in Förderrichtung A hinteren Ende aus Zwischenförderers 3 können die die Standfläche 16 für die Flaschen 1' bildenden Oberseiten der oberen Längen der Förderbänder 10 in einer gemeinsamen horizontalen Ebene liegen. Bei der dargestellten Ausführungsform sind die Förderbänder 10 jedoch so angeordnet, daß die oberen Längen der beiden in Förderrichtung A verlängerten mittleren Förderbänder 10 am Ausgang der Zwischenförderers 3 und auf jeden Fall in Förderrichtung A erst nach dem sich trichterartig verjüngenden Bereich der zwischen den Führungsgeländern 14 und 15 gebildeten Gasse eine Standfläche bilden, die in Richtung senkrecht zur Förderrichtung A gegenüber der Horizontalen leicht geneigt ist, wie dies in der Fig. 2 für den Bereich 16' der Standfläche 16 dargestellt ist. Im Bereich 16' liegt die Standfläche 16 des Zwischenförderers 3 an der Seite des Führungsgeländers 14 etwas tiefer als an der vom Führungsgeländer 15 begrenzten Seite, d.h. die Standfläche 16 des Zwischenförderers 3 weist eine Verwindung in der Form auf, daß diese Standfläche 16 ausgehend von einem horizontalen Bereich am Eingang des Zwischenförderers 3 in Förderrichtung A zunehmend in den gegenüber der Horizontalen geneigten Bereich 16' übergeht, wobei der Übergang zwischen dem horizontalen Bereich und dem Bereich 16', d.h. der Anfang der in Förderrichtung A zunehmenden Verwindung der Standfläche 16 des Zwischenförderers 3 bei der dargestellten Ausführungsform in Förderrichtung A frühestens dort liegt, wo die Flaschen 1' durch die Führungsgeländer 14 und 15 bereits zu dem zweispurigen Flaschenstrom zusammengeführt sind. Durch die beschriebene Verwindung der Standfläche 16 bzw. durch die beschriebene Neigung der Standfläche 16 im Bereich 16' ist es möglich, an den Zwischenförderer 3 den Abförderer 4 mit einer gleichsinnig geneigten Standfläche anzuschließen, um den am Ausgang des Zwischenförderers 3 vorhandenen mehrspurigen, d.h. bei der dargestellten Ausführungsform zweispurigen Flaschenstrom am Eingangsbereich des Abförderers 4 auf besonders kurzer Länge und/oder bei hoher Leistung der Anordnung insgesamt in den einspurigen, am Ausgang des Abförderers 4 abgeförderten Flaschenstrom umzuformen.

Der Abförderer 4 besteht bei der dargestellten Ausführungsform aus zwei parallel zueinander und senkrecht zur Förderrichtung A nebeneinander angeordneten Förderbändern 19, die wiederum in sich geschlossene Scharnierbandketten sind und endlos umlaufen. Zumindest mit ihren oberen Längen sind die Förderbänder 19 bündig nebeneinander liegend angeordnet und bilden somit mit der Oberseite ihrer oberen Längen eine gemeinsame Standfläche des Abförderers 4 für die Flaschen 1", wobei zumindest am Eingang des Abförderers 4 die Standfläche dieses Förderers in etwa niveaugleich mit der von den Förderbändern 10 gebildeten Standfläche des Zwischenförderers 3 liegt.

Am Eingang sowie am Ausgang sind die von den Förderbändern 10 wiederum unabhängigen Förderbänder 19 über Umlenkräder bzw. -rollen 20, 21 und 21′ geführt, die um Achsen drehbar gelagert sind, welche in etwa parallel zu den Achsen der Umlenkrollen 12 verlaufen. Zumindest die Umlenkrollen 21 stehen mit den Förderbändern 19 in Eingriff und sind zum Antrieb der Förderbänder 19 Antriebsmäßig mit Antriebsmotoren 22, 22′ (Getriebemotor) verbunden, wobei der Antrieb der Förderbänder 19 selbstverständlich wiederum so erfolgt, daß sich die oberen in Förderrichtung A erstreckenden Längen der Förderbänder 19 in dieser Förderrichtung bewegen. Durch die Antriebsmotoren 22, 22′ werden die beiden Förderbänder 19 mit gleicher Fördergeschwindigkeit angetrieben. Grundsätzlich ist es jedoch auch möglich, die Antriebe so auszugestalten, daß die Fördergeschwindigkeit des einen Förderbandes 19 etwas größer ist als die Fördergeschwindigkeit des anderen Förderbandes 19, wobei im letzten Fall vorzugsweise das in der Fig. 1 obere, dem geradlinigen, starren Führungsgeländer 23 des Abförderers 4 unmittelbar benachbart liegende Förderband 19 die etwas größere Fördergeschwindigkeit aufweist. Neben dem bereits erwähnten starren Führungsgeländer 23 für die Flaschen 1″, welches sich an der einen Längsseite des Abförderers 4 in Förderrichtung A erstreckt und sich am Eingang des Abförderers unmittelbar an des Führungsgeländer 14 des Zwischenförderers 3 anschließt, besitzt der Abförderer 4 noch ein weiteres, ebenfalls starr ausgebildetes Führungsgeländer 24 Das Führungsgeländer 24 setzt sich aus mehreren Abschnitten zusammen, und zwar aus einem ersten Abschnitt 24′, der parallel zum Führungsgeländer 23 ebenfalls in Förderrichtung A verläuft und ausgehend vom Eingang des Abförderers 4 sich bis in den Bereich zwischen dem Eingang und dem Ausgang dieses Abförderers erstreckt, aus einem sich in Förderrichtung an den Abschnitt 24′ anschließenden Abschnitt 24″, in welchem das Führungsgeländer 24 schräg zur Förderrichtung A nach innen verläuft, sowie aus einem sich hieran anschließenden Abschnitt 24‴, der wiederum parallel zum Führungsgeländer 23 verläuft, wobei der Abstand zwischen dem Führungsgeländer 23 und dem Abschnitt 24′, an welchem das Führungsgeländer 15 in das Führungsgeländer 24 übergeht, dem zweispurigen Flaschenstrom und der Abstand zwischen dem Führungsgeländer 23 und dem Abschnitt 24″ dem einspurigen Flaschenstrom am Ausgang der Anordnung entspricht.

Am Eingang des Abförderers 4 bzw. dort, wo der Abschnitt 24′ in das Führungsgeländer 15 übergeht, ist mit einem Ende ein Gegengeländer 25 schwenkbar befestigt, welches sich in Förderrichtung A und quer zu dieser derart erstreckt, daß der Abstand zwischen dem Führungsgeländer 23 und dem Gegengeländer 25 in Förderrichtung abnimmt und am freien Ende des Gegengeländers 25 nur noch dem einspurigen Flaschenstrom entspricht. Das im Bereich seines freien Endes mit Hilfe eines Gleitklotzes 26 gleitend auf der Standfläche des Abförderers 4 aufliegende Gegengeländer 25 ist gegen die Wirkung einer Gegenkraft seitlich, d.h. im Sinne eines zunehmenden Abstandes von dem Führungsgeländer 23 weg schwenkbar, wie dies in der Fig. 1 mit dem Pfeil C angedeutet ist. Diese Gegenkraft wird beispielsweise durch wenigstens ein nicht näher dargestelltes Federelement und/oder durch die Eigenelastizität des im Bereich seines Förderrichtung vorderen Endes bzw. im Bereich des Eingangs des Abförderers 4 dann fest eingespannten Gegengeländers 25 erzeugt. Bei der dargestellten Ausführungsform ist das Gegengeländer 25 beispielsweise von einer hochkant angeordneten flachen Zunge aus Kunststoff gebildet.

Grundsätzlich ist es möglich, daß die von den oberen Längen der Förderbänder 19 gebildete Standfläche des Abförderers 4 über die gesamte Länge dieses Abförderers in einer horizontalen Ebene liegt. Bei der dargestellten, speziellen Ausführungsform, bei der die Standfläche des Zwischenförderers 3 am Ende dieses Zwischenförderers (Bereich 16′) in der oben beschriebenen Weise quer zur Förderrichtung gegenüber der Horizontalen etwas geneigt ist, weist auch die Standfläche des Abförderers 4 am Eingang dieses Abförderers eine Ent sprechende Neigung auf, wie dies in der Fig. 4 dargestellt ist, d.h. am Eingang des Abförderers 4 besitzt dessen Standfläche im Bereich der von dem Führungsgeländer 23 gebildeten Längsseite ein etwas tieferes Niveau als an der quer zur Förderrichtung A gegenüberliegenden Längsseite, wobei die so gegenüber der Horizontalen leicht geneigte Standfläche des Abförderers 4 nach dem Zusammenführen der Flaschen 1″ in den einspurigen Flaschenstrom, d.h. vorzugsweise in Förderrichtung A nach dem Gegengeländer 25 in eine horizontale Standfläche übergeht. Bei dieser Ausbildung besitzt also auch die von den oberen Längen der Förderbänder 19 gebildete Standfläche des Abförderers 4 eine Verwindung.

Wie die Fig. 1 zeigt, liegen die von den Umlenkrollen 7 und 11 gebildeten Umlenkbereiche der Förderbänder 5 und 10 sowie die von den Umlenkrollen 12 und 20 gebildeten Umlenkbereiche der Förderbänder 10 und 19 einander unmittelbar benachbart. Über dem von den Umlenkrollen 7 und 11 gebildeten Umlenkbereich ist ein erstes Gleitblech 27 ortsfest derart angeordnet, daß dieses Gleitblech 27 mit seiner Unterseite der Oberseite der oberen Längen der Förderbänder 10 unmittelbar benachbart liegt bzw. mit seiner Unterseite auf den oberen Längen zumindest der Förderbänder 10 gleitend aufliegt und mit seiner Oberseite eine sich nicht bewegende Gleitfläche für den Boden der Flaschen 1 bildet, auf die (Gleitfläche) die über den Zuförderer 2 angeförderten Flaschen 1 zunächst aufgeschoben werden, bevor die Flaschen 1 dann nach dem Passieren des Gleitbleches 27 auf der von den Transportbändern 10 gebildeten Standfläche des Zwischenförderers 3 zu stehen kommen. Die in Förderrichtung vordere Kante 28 des Gleitbleches 27 ist so angeordnet, daß sich ein nahtloser und nahezu niveaugleicher Übergang zwischen der von der Oberseite des Gleitbleches 27 gebildeten ortsfesten Gleitfläche und der von den Förderbändern 5 gebildeten Gleitfläche ergibt. Hierfür ist es zweckmäßig, daß das Gleitblech 27 im Bereich seiner senkrecht zur Förderrichtung A verlaufenden Kante auch noch die von den Förderbändern 5 gebildete Standfläche wenigstens geringfügig überlappt.

Die in Förderrichtung hintere Kante des Gleitbleches 27 in deren Bereich das Gleitblech 27 die von den Förderbändern 10 des Zwischenförderers 3 gebildete Standfläche überlappt, ist bei der dargestellten Ausführungsform im Zuschnitt dachschrägenartig ausgebildet, d.h. diese hintere Kante setzt sich aus zwei mit der Förderrichtung A einen Winkel größer als 60° und kleiner als 90°, vorzugsweise einen Winkel von 65° einschließenden geradlinigen Abschnitte 29 und 30 zusammen, die speziell einen solchen Verlauf aufweisen, daß die Abschnitte 29 und 30 einen stumpfen Winkel miteinander einschließen, der sich entgegen der Förderrichtung A öffnet, wobei der Übergangs- bzw. Schnittpunkt der Abschnitte 29 und 30, in dem diese Abschnitte den größten Abstand von der Kante 28 aufweisen, im Bereich der in Förderrichtung A verlaufenden Mittelachse des Zwischenförderers 3 liegt. Der Abstand zwischen der Kante 28 und den Abschnitten 29 bzw. 30 nimmt jeweils ausgehend von der Mittelachse des Zwischenförderers 3 zu dessen Längsseiten hin ab. Durch das Gleitblech 27 wird in Verbindung mit der im Vergleich zu den Förderbändern 5 höheren Fördergeschwindigkeit der Förderbänder 10 erreicht, daß sich nach dem Passieren des Gleitbleches 27, über welches die Flaschen 1 durch den jeweils über den Zuförderer angeförderten Flaschenstrom geschoben werden, zunächst eine Auflockerung im Flaschenstrom ergibt, wie dies in der Fig. 6 für die auf den Transportbändern 10 des Zwischenförderers 3 aufstehenden Flaschen 1′ angedeutet ist. Durch diese auflockerung des Flaschenstromes ist es dann möglich, daß mittels des von dem Zwischenförderer 3 gebildeten Umformbereichs die Flaschen 1′ innerhalb der durch die Führungsgeländer 14 und 15 gebildeten trichterartigen Gasse in den zweispurigen Flaschenstrom zusammengeführt werden können, wobei für dieses Zusammenführen für jede Flasche 1′ genügend Platz zur Verfügung steht und es somit nicht zu einem gegenseitigen Verklemmen der Flaschen bzw. zu einem Blockieren des Flaschenstromes kommt. Unter Beibehaltung der gleichen Wirkung ist es grundsätzlich auch möglich, die in Förderrichtung A hintere Kante des Gleitbleches 27 andersartig schräg zur Förderrichtung A verlaufend auszugestalten, beispielsweise V-förmig, wie dies in der Fig. 1 mit unter brochenen Linien dargestellt ist. In diesem letztgenannten Fall ist die in Förderrichtung hintere Kante des Gleitbleches 27 von zwei Abschnitten 29′ und 30′ gebildet, die wiederum einen Winkel miteinander einschließen, der sich jedoch in Förderrichtung A öffnet. Der Übergangsbereich zwischen den Abschnitten 29′ und 30′ liegt auch bei dieser Ausführung wiederum im Bereich der sich in Förderrichtung A erstreckenden Mittelachse der Zwischenförderers, wobei an diesem Übergangsbereich der Abstand zwischen der vorderen und hinteren Kante des Gleitbleches 27 am kleinsten ist und zu den beiden Längsseiten des Zwischenförderers 3 hin zunimmt. Grundsätzlich ist es auch möglich, die in Förderrichtung hintere Kante des Gleitbleches 27 als Gerade oder als Schräge auszubilden, die sich über die gesamte Breite aus Zwischenförderers 3 erstreckt, wobei jedoch die Schräge mit einer der beiden Längsseiten des Zwischenförderers 3 einen Winkel größer als 60° und kleiner als 90°, vorzugsweise einen Winkel von 65° einschließt.

Am Übergangsbereich zwischen dem Zwischenförderer 3 und dem Abförderer 4 ist ein weiteres Gleitblech 31 ortsfest über den Umlenkrollen 20 angeordnet, welches in seiner Funktion dem Gleitblech 27 entspricht. Das Gleitblech 31 liegt wiederum mit seiner unteren Oberflächenseite (Unterseite) auf der Oberseite der oberen Längen der Förderbänder 19 unmittelbar benachbart bzw. die Unterseite des Gleitbleches 31 liegt auf der Oberseite der oberen Längen zumindest der Förderbänder 19 im Bereich der Umlenkrollen 20 gleitend auf. Die Oberseite des Gleitbleches 31 bildet eine sich nicht bewegende Gleit- oder Standfläche, auf die die vom Zwischenförderer 3 zugeführten Flaschen 1′ mit ihrem Boden zunächst aufgleiten bzw. von den nachfolgenden Flaschen 1′ aufgeschoben werden, bevor diese Flaschen dann auf die von den Förderbändern 19 gebildete Standfläche des Abförderers 4 gelangen. Die in Förderrichtung A vordere Kante 32 des Gleitbleches 31 verläuft wiederum senkrecht zur Förderrichtung A und ist so angeordnet, daß sich ein möglichst lückenloser und niveaugleicher Übergang zwischen der von den Förderbändern 10 gebildeten Gleitfläche des Zwischenförderers 3 und der von der Oberseite des Gleitbleches 31 gebildeten ortsfesten Gleitfläche ergibt, wofür das Gleitblech 31 im Bereich seiner Kante 32 den Zwischenförderer 3 an seinen mittleren Förderbändern 10 geringfügig überlappt. Die in Förderrichtung hintere Kante 33 des Gleitbleches 31, an welcher dieses Gleitblech die von den Förderbändern 19 gebildete Standfläche des Abförderers 4 überlappt, verläuft schräg zur Förderrichtung A, und zwar bei der dargestellten Ausführungsform in der Form, daß die Kante 33 mit der von dem Abschnitt 24′ des Führungsgeländers 24 bzw. von dem in Förderrichtung vorderen Ende des Gegengeländers 25 begrenzten Längsseite des Abförderers 4 einen Winkel größer als 60° und kleiner als 90°, vorzugsweise einen Winkel von 65° einschließt, der sich in Förderrichtung öffnet. Durch das Gleitblech 31 wird in Verbindung mit der gegenüber den Förderbändern 10 etwas höheren Fördergeschwindigkeit der Förderbänder 19 in dem sich an das Gleitblech 31 in Förderrichtung anschließenden Bereich (Umformbereich) des Abförderers 4, in welchem (Bereich) die Spurbreite des Abförderers 4 noch einem zweireihigen Flaschenstrom entspricht, eine Auflockerung des am Ausgang des Zwischenförderers 3 vorhandenen Flaschenstromes erreicht, wie dies in der Figur 1 für die Flaschen 1″ angedeutet ist. Diese erneute Auflockerung des Flaschenstromes bewirkt, daß nach dem Passieren des Gleitbleches 31 jede an der Seite des Führungsgeländers 24 bzw. des Gegengeländers 25 befindliche Flasche 1″ in einer Lücke zwischen zwei unmittelbar entlang des Führungsgeländers 23 geförderten Flaschen 1″ drucklos Platz findet bzw. durch das Gegengeländer 25 ev. mit Unterstützung der Neigung der Standfläche des Abförderers 4 (entsprechend der Figur 4) in eine solche Lücke seitlich hineinbewegt werden kann, ohne daß es zu einem gegenseitigen Verklemmen der Flaschen 1″ bzw. zu einem Blockieren des Flaschenstromes kommt. Spätestens nach dem Passieren des Gegengeländers 25 werden die Flaschen 1″ dann von dem dem Führungsgeländer 23 unmittelbar benachbart liegenden Förderband 19 des Abförderers 4 als einspuriger Flaschenstrom abgeführt bzw. an eine sich an das in der Fig. 6 rechte Ende der Anordnung anschließende, nicht näher dargestellte weitere Fördereinrichtung oder an den Eingang (Aufgabe) einer nicht näher dargestellten Flaschenbehandlungsmaschine usw. übergeben.

Grundsätzlich ist es auch möglich, die in Förderrichtung hintere Kante 33 des Gleitbleches 31 in anderer Weise als dargestellt, als Schräge auszubilden. Für die hintere Kante 33 ist auch eine andere Formgebung denkbar. Grundsätzlich ist es schließlich auch möglich, die hinteren Kanten beider Gleitbleche 27 und 31 geradlinig und senkrecht zur Förderrichtung A auszubilden, wenngleich die beschriebenen schrägen Ausführungen hinsichtlich einer angestrebten hohen Leistung (Anzahl der je Zeiteinheit angeförderten und abgeförderten Flaschen 1 bzw. 1‴) sowie hinsichtlich der Funktionssicherheit der Anordnung besondere Vorteile bieten. Die effektiven Fördergeschwindigkeiten des Zuförderers 2, des Zwischenförderers 3 sowie des Abförderers 4 sind selbstverständlich so aufeinander abgestimmt, daß die Anzahl der je Zeiteinheit mehrspurig über den Zuförderer 2 angeförderten Flaschen 1 gleich der Anzahl der mehrspurig über den Abförderer 4 abgeförderten Flaschen 1″ ist, d.h. bei sechsspuriger Ausbildung des Zuförderers 2 ist die effektive Fördergeschwindigkeit des Abförderers 4 zumindest sechsmal so groß wie die effektive Fördergeschwindigkeit des Zuförderers 2. Gleiches gilt auch in bezug auf das Verhältnis der effektiven Fördergeschwindigkeiten zwischen dem Zwischenförderer 3 und dem Abförderer 4 bzw. zwischen dem Zuförderer 2 und dem Zwischenförderer 3, d.h. bei der dargestellten Ausführungsform ist die effektive Fördergeschwindigkeit des Abförderers 4 weiterhin etwa zweimal so groß wie die effektive Fördergeschwindigkeit des Zwischenförderers 3 oder umgekehrt die effektive Fördergeschwindigkeit des Zwischenförderers 3 etwa dreimal so groß wie die effektive Fördergeschwindigkeit des Zuförderers 2. Ganz allgemein gilt, daß das Verhältnis der effektiven Fördergeschwindigkeiten zwischen einem Förderer und einem sich unmittelbar anschließenden Förderer proportional zu dem Verhältnis zwischen der Anzahl der Spuren des Flaschenstromes am Ausgang des anschließenden Förderers und der Anzahl der Spuren am Eingang des anschließenden Förderers ist.

Die in der Figur 5 dargestellte Ausführung unterscheidet sich von der Anordnung nach den Figuren 1 - 4 im wesentlichen nur dadurch, daß sich der Abförderer 4 mit seinem Eingang nicht unmittelbar an den Ausgang des Zwischenförderers 3 anschließt, sondern zwischen beiden Förderern eine kreisbogenförmig gekrümmte Förderstrecke 34 vorgesehen ist, in der der den Zwischenförderer 3 verlassende zweispurige Flaschenstrom (Flaschen 1′) bei der Figur 5 dargestellten Ausführung um etwa 90° Grad umgelenkt wird, bevor die Flaschen 1′ dann auf das Gleitblech 31 aufgleiten, welches in diesem Fall am Übergangsbereich zwischen dem in Förderrichtung A hinteren Ende der Förderstrecke 34 und dem Eingang des Abförderers 4 vorgesehen ist. Die Förderstrecke 34 besitzt zwei seitliche Führungsgeländer 36 und 36′, von denen das Führungsgeländer 36 an seinen beiden Enden in die Führungsgeländer 10 bzw. 23 und das Führungsgeländer 36′ an seinen beiden Enden in die Führungsgeländer 15 und 24 bzw. in das Gegengeländer 25 übergeht.

Abweichend von den in den Figuren 1 - 5 dargestellten speziellen Ausführungsformen ist es selbstverständlich auch möglich, die Spurbreite des Zuförderers 2 größer zu wählen, so daß über diesen ein mehr als sechsspuriger Flaschenstrom zugeführt wird. Weiterhin ist es auch möglich und bei größeren Spurbreiten des Zuförderers 2 zweckmäßig, den Zwischenförderer 3 so auszugestalten, daß sich an dessen Ausgang ein mehr als zweispuriger Flaschenstrom ergibt. Unabhängig von der jeweiligen Ausgestaltung hat die erfindungsgemäße Anordnung den Vorteil, daß bei hoher Leistung, d.h. vor allem auch bei einem breiten zugeführten, mehrspurigen Flaschenstrom und bei einem sehr schnellen Abführen der Flaschen in einem einspurigen Flaschenstrom ein zuverlässiges und störungsfreies Umformen des zugeführten mehrspurigen Flaschenstromes in den einspurigen Flaschenstrom bei im Vergleich zu anderen Anordnungen geringem Geräuschpegel möglich ist. Zur Anpassung der Anordnung an Flaschen mit unterschiedlichem Durchmesser sind die Führungsgeländer 9, 14, 15, 23 und 24 zumindest jeweils an einer Längsseite der Förderer 2, 3 bzw. 4 quer zur Förderrichtung einstellbar.

Eine Abwandlung des in Fig. 1 dargestellten Zwischenförderers 3 zeigt Fig. 7 und ist darin zu sehen, daß das über die übrigen Förderbänder 10 hinaus verlängerte Förderband, an das sich der Abförderer 4 anschließt, im Bereich der übrigen Förderbänder 10 aus zwei übrigen Förderbändern 10 und der über die übrigen Förderbänder 10 hinaus verlängerte Bereich aus einem aus zwei Förderbändern 36 gebildeten weiteren Dosierband 35 mit regelbarem Antriebsmotor 13′ besteht, wobei sich die horizontal verlaufende Standfläche 16 des Zwischenförderers wenigstens bis in den Anschlußbereich des weiteren Dosierbandes 35 an die weiteren Förderbänder 10 erstreckt und für alle übrigen Förderbänder 10 des Zwischenförderers 3 eine höhere Fördergeschwindigkeit vorgesehen ist als für das weitere Dosierband 35 des Zwischenförderers 3, das eine niedrigere Fördergeschwindigkeit aufweist als der Abförderer 4. Im Übergangsbereich zwischen den weiteren Transportbändern 10 und dem Dosierband 35 des verlängerten Transportbandes ist ein übliches Gleitblech 37 angeordnet, daß einen im wesentlichen höhengleichen Übergang zwischen den weiteren Transportbändern 10 und den Förderbändern 36 herstellt. Unter dem Gleitblech 37 sind außer den treibenden Umlenkrädern 12 der weiteren Transportbänder 10 auch die diesen benachbarten Umlenkrollen 12' des Dosierbandes 35 angeordnet. Durch die vorgeschriebene Unterteilung des verlängerten Förderbandes in aus den weiteren Transportbändern 10 und dem Dosierband 35 gebildete unabhängig voneinander antreibbare Förderstrecke wird für diese eine Geschwindigkeitsabstufung ermöglicht, die gewährleistet, daß die Transportfläche des Dosierbandes 35 stets ausreichend mit Flaschen 1' belegt ist, aber daher auch sichergestellt ist, daß zwischen den Böden der Flaschen 1' und den Standflächen der Förderbänder 36 nur eine geringe Geschwindigkeitsdifferenz besteht.

In der Fig. 8 sind der Zwischenförderer 3 und der Abförderer 4 einer weiteren Ausführungsform der Erfindung wiedergegeben. Diese Ausführungsform unterscheidet sich von der Ausführung nach Fig. 1 zunächst einmal dadurch, daß die beiden mittleren Förderbänder 10 durch mehrere, schmäler ausgebildete Förderbänder bzw. Scharnierbandketten, nämlich durch die Förderbänder 38-42 ersetzt sind, so daß der Zwischenförderer 3 quer zur Förderrichtung A nebeneinander angeordnet insgesamt neun Förderbänder, nämlich zwei außenliegende Paare von Förderbändern 10 sowie zwischen diesen Paaren die Förderbänder 38-42 aufweist, die bei der dargestellten Ausführungsform beispielsweise jeweils eine Breite besitzen, die etwa 38% der Breite eines Förderbandes 10 beträgt, d.h. bei einer Breite der Förderbänder 10 von ca. 82 mm ist die Breite jedes Förderbandes 38-42 etwa 32 mm. Die Förderbänder 38-42 können auch etwas breiter oder aber bevorzugt noch schmäler, als vorstehend angegeben, ausgeführt sein, und zwar abhängig von dem Bodendurchmesser der zu verarbeitenden kleinsten, d.h. den kleinsten Bodendurchmesser aufweisenden Flaschen 1'. Die Breite der Förderbänder 38-42 ist auf jeden Fall so gewählt, daß sie höchstens gleich, vorzugsweise jedoch kleiner ist als der Bodendurchmesser (bevorzugt halber Bodendurchmesser) der kleinsten zu verarbeitenden Flaschen.

Die Förderbänder 10 und die beiden äußeren schmäleren Förderbänder 38 und 42 sowie das mittlere schmälere Förderband 40 sind im Anschlußbereich 43 zwischen dem Zwischenförderer 3 und dem Abförderer 4 über Umlenkrollen geführt, die auf einer gemeinsamen Achse 44 angeordnet und durch den Antriebsmotor 45 angetrieben sind. Die zwischen den Förderbändern 38, 40 und 42 angeordneten Förderbänder 39 und 41, die im Anschlußbereich 43 in Förderrichtung A vor den Förderbändern 10, 38, 40 und 42 enden, sind über Umlenkrollen geführt, die um eine Achse 46 drehbar und durch den Antriebsmotor 45 über ein Getriebe, beispielsweise über den Kettentrieb 47 angetrieben sind. Der Antrieb ist dabei so ausgebildet, daß sämtliche Förderbänder 10 und 38-42 gleichsinnig und mit gleicher Geschwindigkeit umlaufen. Entsprechend der Länge der Förderbänder 38 und 42 liegt die Achse 46 in Förderrichtung A mit Abstand vor der Achse 44.

Der Abförderer 4 weist bei der dargestellten Ausführungsform fünf schmale Förderbänder 48-52 auf, die gleiche Breite wie die Förderbänder 38-42 besitzen und quer zur Förderrichtung A derart nebeneinander angeordnet sind, daß die beiden äußeren Förderbänder 48 und 52 die Fortsetzung der Förderbänder 38 und 42, das mittlere Förderband 50 die Fortsetzung des Förderbandes 40 und die beidseitig von dem mittleren Förderband 50 angeordneten Förderbänder 49 und 51 die Fortsetzung der Förderbänder 38 bzw. 42 bilden, wobei im Anschlußbereich 43 die Umlenkrollen der Förderbänder 48, 50 und 52 auf der in Förderrichtung auf die Achse 44 folgenden Achse 53 und die Umlenkrollen für die Förderbänder 49 und 51 auf die in Förderrichtung A auf die Achse 46 folgende Achse 54 angeordnet sind. Anstelle des sich über die gesamte Förderbreite erstreckenden Gleitbleches 31 sind bei der in der Fig. 8 dargestellten Ausführungsform am Anschlußbereich 43 der Anzahl der schmäleren Förderbänder 38-42 bzw. 48-52 des Zwischenförderers 3 bzw. des Abförderers 4 entsprechend fünf schmale Gleitbleche 55 vorgesehen, deren Breite quer zur Förderrichtung A in etwa gleich der Breite der Förderbänder 38-42 bzw. 48-52 ist und die auch in Draufsicht jeweils deckungsgleich mit diesen schmäleren Förderbändern am Übergang zwischen einem solchen Förderband des Zwischenförderers 3 und einem solchen Förderband des Abförderers 4 vorgesehen sind.

Der Zwischenförderer 3 besitzt wiederum die beiden Führungsgeländer 14 und 15, die zwischen sich eine Gasse für die Flaschen 1' bilden, welche sich in Förderrichtung A zunächst trichterartig verengt, daran anschließend einen Bereich mit im wesentlichen konstanter Breite und hieran anschließend (im Anschlußbereich 43) einen weiteren Bereich besitzt, in welchem sich die zwischen den Führungsgeländern 14 und 15 gebildete Gasse erneut verengt, und zwar auf die Spurbreite, die der Abförderer 4 an seinem Eingangsbereich aufweist. Für die nochmalige Verengung der Gassenbreite weist das Führungsgeländer 15 am Anschlußbereich 43 einen elastischen Abschnitt 15' auf, in welchem das Führungsgeländer 15 schräg zur Förderrichtung A nach innen verläuft. Das in Förderrichtung hintere Ende des Abschnittes 15' ist durch eine Federeinrichtung 15" so gehalten, daß der Abschnitt 15' im Bedarfsfall (beispielsweise bei einem ev. Verkeilen der Flaschen 1') seitlich etwas ausweichen kann. An den Abschnitt 15' schließt sich am Eingangsbereich des Abförderers 4 ein dem Gegengeländer 25 entsprechender Abschnitt 56' eines Geländers 56 an, das bei der Ausführung nach Fig. 8 das Geländer 24 des Abförderers 4 ersetzt, so daß bei dieser Ausführungsform die Gasse des Abförderers durch die beiden Geländer 23 und 56 begrenzt ist. An dem in Förderrichtung A vorderen Ende (Abschnitt 56') ist das Geländer 56 bei 57 am Maschinengestell um eine vertikale Achse angelenkt. Weiterhin ist das Geländer 56 zumindest im Abschnitt 56' elastisch ausgebildet und zusätzlich durch eine oder mehrere außen anliegende Blattfeder 58 abgestützt, so daß im Eingangsbereich des Abförderers 4 die dortigen Flaschen 1" durch den Abschnitt 56' in den einspurigen Flaschenstrom zusammengeführt werden, ohne daß an sich eine Neigung der von den Förderbändern 48-52 gebildeten Standfläche für diese Flaschen 1" notwendig ist. Um allerdings umgefallene Flaschen 1" am Eingangsbereich des Abförderers 4 auszuscheiden, ist auch bei dieser Ausführungsform die vorgenannte Standfläche wiederum entsprechend der Fig. 4 geneigt, d.h. an der vom Geländer 23 begrenzten Seite ist das Niveau der Standfläche etwas niedriger als an der gegenüberliegenden, vom Geländer 56 bzw. vom Abschnitt 56' begrenzten Seite. Sämtliche Förderbänder 48-52 laufen gleichsinnig und mit einer Geschwindigkeit um, die größer ist als die Umlaufgeschwindigkeit der Förderbänder 10 und 38-42. Da einige Förderbänder des Abförderers 4, nämlich die Förderbänder 49 und 51 bis in den Anschlußbereich 43 reichen bzw. dort in Förderrichtung A vor dem Ende insbesondere der Förderbänder 38, 40 und 42 beginnen, da außerdem die Förderbänder 38-40 und 48-52 jeweils eine Breite quer zur Förderrichtung A aufweisen, die kleiner ist als der Bodendurchmesser bzw. die Standfläche der Flaschen 1', und da ferner die Breite der Gleitbleche 55 quer zur Förderrichtung A sowie deren Anordnung so gewählt sind, daß neben jedem Gleitblech 55 wenigstens eine durch ein derartiges Gleitblech 55 nicht abgedeckte Teillänge eines Förderbandes 38-42 bzw. 48-52 liegt, wird bei dieser Ausführungsform ein aufgelockerter Flaschenstrom im Anschlußbereich 43 und damit ein weitestgehend stoß-und druckfreies Zusammenführen der Flaschen 1' des Zwischenförderers 3 in den von den Flaschen 1" am Abförderer 4 gebildeten einspurigen Flaschenstrom erreicht. Im Gegensatz zu den vorbeschriebenen Ausführungen, bei denen im Anschlußbereich zwischen dem Zwischenförderer 3 und dem Abförderer 4 jeweils ein sich über die gesamte Förderbreite erstreckendes Gleitblech 31 vorgesehen ist, über welches sich der Flaschenstrom nur jeweils durch das Nachschieben der über den Zwischenförderer 3 geförderten Flaschen 1' bewegen kann, stehen bei der Ausführungsform nach Fig. 8 die Flaschen 1' nur mit einem Teil ihres Bodens auf dem jeweiligen Gleitblech 55 und mit dem übrigen Teil ihres Bodens auf dem jeweils benachbarten Förderband 38-42 bzw. 48-52 auf und werden dadurch durch dieses Förderband über das nur einen geringen Reibungswiderstand erzeugende Gleitblech 55 bewegt.

Anstelle der Gleitbleche 55 können bei der Ausführung nach Fig. 8 auch Übergangsbleche verwendet werden, die hinsichtlich ihrer Formgebung den Gleitblechen 55 entsprechen, aber lediglich den Umlenkbereich der Förderbänder 38-42 bzw. 48-52 abdecken und unterhalb des Niveaus der von den oberen Längen der Förderbänder 38-42 und 48-52 gebildeten Standflächen liegen. Dies ist möglich, wenn die Breite der Förderbänder 38-42 und 48-52 kleiner ist als der Bodendurchmesser der Flaschen 1', so daß diese dann jeweils auf wenigstens einem der Förderbänder 38-42 und 48-52 aufstehen und (ohne zu kippen) mit Abstand über die tieferliegenden Übergangsbleche geführt werden.

## Patentansprüche

1. Anordnung zum Umformen eines angeförderten mehrspurigen Flaschenstroms in einen abzufördernden einspurigen Flaschenstrom, mit mehreren endlos umlaufenden und mit ihren oberen Längen jeweils als Standflächen für die Flaschen dienenden Förderbändern, die einen äußere Führungsgeländer aufweisenden mehrspurigen Zuförderer (2) und hieran in Förderrichtung anschließend einen Zwischenförderer (3) mit in Förderrichtung abnehmender Spurbreite sowie einen äußere Führungsgeländer aufweisenden Abförderer (4) bilden, wobei die effektive Fördergeschwindigkeit des Zwischenförderers größer ist als die effektive Fördergeschwindigkeit des Zuförderers und die effektive Fördergeschwindigkeit des Abförderers größer ist als die effektive Fördergeschwindigkeit des Zwischenförderers, und wobei im Anschlußbereich zwischen dem Zuförderer und dem Zwischenförderer wenigstens ein erstes Übergangsblech, vorzugsweise in Form eines Gleitbleches, und im Anschlußbereich zum Abförderer wenigstens ein zweites Übergangsblech vorgesehen sind, wobei der Zuförderer, der Zwischenförderer und der Abförderer jeweils von eigenen Förderbändern gebildet sind, dadurch gekennzeichnet, daß sich in Förderrichtung (A) der Zwischenförderer (3) spurengleich an den Zuförderer (2) und der Abförderer (4) spurengleich an den Zwischenförderer (3) anschließen, daß der in Förderrichtung (A) eine abnehmende Spurbreite aufweisende Abförderer (4) in seinem sich an den Zwischenförderer (3) anschließenden Eingangsbereich wenigstens zweispurig ausgebildet ist, daß das wenigstens eine zweite Übergangsblech (31, 55) im Anschlußbereich (43) zwischen dem Zwischenförderer (3) und dem Abförderer (4) vorgesehen ist, daß der Zwischenförderer (3) beidseitig äußere Führungsgeländer (14, 15, 15') aufweist, die zwischen sich eine sich in Förderrichtung (A) trichterartig verjüngende vom Zuförderer (2) zum Abförderer (4) reichende Gasse begrenzen, wobei diese Gasse im Anschlußbereich zwischen dem Zuförderer (2) und dem Zwischenförderer (3) die Spurbreite des Zuförderers (2) und bereits vor dem Anschlußbereich zum Abförderer (4) die Spurbreite des Abförderers (4) aufweist, und daß zumindest der Zuförderer (2) und der trichterartige Bereich der Gasse des Zwischenförderers (3) horizontal verlaufende Standflächen aufweisen.

2. Anordnung nach Anspruch 1, dadurch gekennzeichnet, daß das wenigstens eine zweite Übergangsblech (31, 55) ein Gleitblech ist, welches in etwa niveaugleich mit den Standflächen des Zwischenförderers (3) und des Abförderers (4) liegt.

3. Anordnung nach Anspruch 1 oder 2, dadurch gekennzeichnet, daß der Abförderer (4) wenigstens zwei Förderbänder (19, 48-52) aufweist, die quer zur Förderrichtung (A) nebeneinander angeordnet sind und zumindest mit ihren oberen Längen quer zur Förderrichtung (A) bündig aneinander anschließen.

4. Anordnung nach einem der Ansprüche 1 bis 3, dadurch gekennzeichnet, daß die Spurbreite des Zuförderers (2) gleich einem Zweifachen oder einem anderen größeren ganzzahligen Vielfachen derjenigen Spurbreite ist, die der Abförderer (4) in seinem sich an den Zwischenförderer (3) anschließenden Eingangsbereich aufweist.

5. Anordnung nach Anspruch 3 und 4, dadurch gekennzeichnet, daß der Zuförderer (2) von mehreren Förderbändern (5) gebildet ist, die quer zur Förderrichtung (A) nebeneinander angeordnet sind und zumindest mit ihren oberen Längen quer zur Förderrichtung (A) bündig aneinander anschließen, und daß die Anzahl der Förderbänder (5) des Zuförderers (2) gleich einem ganzzahligen Vielfachen von Zwei ist.

6. Anordnung nach einem der Ansprüche 1 bis 5, dadurch gekennzeichnet, daß die Anzahl der Förderbänder (10) des Zwischenförderers (3) gleich oder kleiner ist als die Anzahl der Förderbänder (5) des Zuförderers (2).

7. Anordnung nach einem der Ansprüche 1 bis 6, dadurch gekennzeichnet, daß bei einem Zwischenförderer (3), der mehrere Förderbänder (10) aufweist, die quer zur Förderrichtung (A) nebeneinander angeordnet sind und zumindest mit ihren oberen Längen quer zur Förderrichtung bündig aneinander anschließen, wenigstens ein an der in Förderrichtung (A) verlaufenden Mittelachse des Zwischenförderers (3) vorgesehenes Förderband (10) in Förderrichtung (A) über die übrigen Förderbänder (10) des Zwischenförderers (3) hinaus verlängert ist, und daß dieses wenigstens eine verlängerte Förderband (10) die Standfläche des Zwischenförderers in einem sich in Förderrichtung (A) an den sich trichterartig verengenden Bereich der Gasse anschließenden weiteren Bereich dieser Gasse bildet, an welchen sich der Abförderer (4) anschließt, wobei vorzugsweise bei gleicher Breite der Förderbänder des Zwischenförderers (3) und des Abförderers (4) die Anzahl der verlängerten, die Standfläche des Zwischenförderers (3) in dem weiteren Bereich der Gasse bildenden Förderbänder (10) gleich der Anzahl der Förderbänder (19) ist, die der Abförderer (4) in seinem sich an dem Zwischenförderer (3) anschließenden Eingangsbereich aufweist.

8. Anordnung nach einem der Ansprüche 1 bis 7, dadurch gekennzeichnet, daß der Abförderer (4) an einer Längsseite ein in Förderrichtung (A) sich geradlinig erstreckendes starres äußeres Führungsgeländer (23) und an der anderen Längsseite ein zweites äußeres Führungsgeländer (24, 25, 56, 56') aufweist, welches zumindest in einem Teilbereich in Förderrichtung (A) sowie gleichzeitig quer zur Förderrichtung (A) derart verläuft, daß sich für den Abförderer (4) die in Förderrichtung (A) abnehmende Spurbreite ergibt, wobei dieser Teilbereich des Führungsgeländers zumindest in einem Teilabschnitt (25, 56') elastisch ausgebildet ist, wobei vorzugsweise die Standfläche des Abförderers (4) zumindest in dem Bereich abnehmender Spurbreite quer zur Förderrichtung (A) gegenüber einer horizontalen Ebene derart geneigt ist und die Standfläche des Abförderers (4) am ersten Führungsgeländer (23) ein etwas tieferes Niveau aufweist als am zweiten Führungsgeländer (24, 25, 26 56'), und/oder wobei vorzugsweise die Standfläche des Zwischenförderers (3) in dem weiteren Bereich der Gasse auf einer bis an das in Förderrichtung (A) hintere Ende des Zwischenförderers (3) reichenden Teillänge quer zur Förderrichtung (A) gegenüber der Horizontalen geneigt ist und zumindest am Anschlußbereich zwischen dem Zwischenförderer (3) und dem Abförderer (4) die Standflächen des Zwischenförderers (3) und des Abförderers (4) quer zur Förderrichtung die gleiche Neigung gegenüber der Horizontalen aufweisen.

9. Anordnung nach einem der Ansprüche 1 bis 8, dadurch gekennzeichnet, daß wenigstens eines der beiden äußeren Führungsgeländer (14, 15) des Zwischenförderers (3) zumindest in dem sich trichterartig verengenden Bereich der Gasse des Zwischenförderers (3) elastich ausgebildet ist.

10. Anordnung nach einem der Ansprüche 1 bis 9, dadurch gekennzeichnet, daß sich der Zwischenförderer (13) an den Abförderer (4) über eine, vorzugsweise gekrümmte Förderstrecke (34) anschließt, und daß am Übergang zwischen dem in Förderrichtung (A) hinteren Ende dieser Förderstrecke (34) und dem in Förderrichtung (A) vorderen Ende des Abförderers (4) das zweite Übergangsblech (31) vorgesehen ist.

11. Anordnung nach einem der Ansprüche 1 bis 10, gekennzeichnet durch quer zur Förderrichtung (A) einstellbare Führungsgeländer (9, 14, 15, 23, 24) am Zuförderer (2) und/oder Zwischenförderer (3) und/oder Abförderer (4).

12. Anordnung nach einem der Ansprüche 1 bis 11, dadurch gekennzeichnet, daß die in Förderrichtung (A) hintere Kante wenigstens eines Übergangsblechs (27, 31, 55) senkrecht zur Förderrichtung (A) verläuft.

13. Anordnung nach einem der Ansprüche 1 bis 12, dadurch gekennzeichnet, daß die in Förderrichtung (A) hintere Kante (29, 30; 29', 30'; 33) wenigstens eines als Gleiblech ausgebildeten Übergangsblechs (27, 31) zumindest einen Abschnitt aufweist, der schräg zur Förderrichtung (A) verläuft, d.h. mit einer Achse senkrecht zur Förderrichtung (A) einen Winkel kleiner als 30° vorzugsweise einen Winkel von 25° einschließt, wobei vorzugsweise die in Förderrichtung hintere Kante wenigstens eines als Gleitblech ausgebildeten Übergangsblechs (27) zumindest zwei Abschnitte (29, 30; 29', 30') aufweist, die bevorzugt die gleiche Länge aufweisen und in unterschiedlichen Richtungen schräg zur Förderrichtung verlaufend sind, und zwar vorzugsweise derart, daß die in Förderrichtung hintere Kante dieses wenigstens einen Übergangsblechs (27) durch die Abschnitte (29, 30; 29', 30') einen dachschrägenartigen oder einen V-förmigen Verlauf aufweist, wobei die beiden Abschnitte (29, 30; 29', 30' bevorzugt mit der senkrecht zur Förderrichtung (A) verlaufenden Achse jeweils den gleichen Winkel einschließen.

14. Anordnung nach einem oder mehreren der Ansprüche 7 bis 13, dadurch gekennzeichnet, daß das wenigstens eine über die übrigen Förderbänder (10) hinaus verlängerte Förderband, an das sich der Abförderer (4) anschließt, im Bereich der übrigen Förderbänder (10) aus wenigstens einem übrigen Förderband (10) und in dem über die übrigen Förderbänder (10) hinaus verlängerten Bereich aus einem weiteren Dosierband (35) besteht, wobei sich die horizontal verlaufende Standfläche (16) des Zwischenförderers (3) wenigstens bis in den Anschlußbereich des weiteren Dosierbandes (35) an das wenigstens eine weitere Förderband (10) erstreckt und für alle Förderbänder (10) des Zwischenförderers (3), eine höhere Fördergeschwindigkeit vorgesehen ist als für das weitere Dosierband (35), das eine niedrigere Fördergeschwindigkeit aufweist als der Abförderer (4).

15. Anordnung nach einem der Ansprüche 3 bis 14, dadurch gekennzeichnet, daß bei einem Zwischenförderer (3), der mehrere Förderbänder (10, 43-42) aufweist, sich die wenigstens zwei Förderbänder (48-52) des Abförderers (4) an wenigstens zwei Förderbänder (38, 42) des Zwischenförderers (3), bevorzugt an zwei im mittleren Bereich des Zwischenförderers (3) vorgesehene Förderbänder (38, 42) im Anschlußbereich (43) zwischen dem Zwischenförderer (3) und dem Abförderer (4) anschließen, daß wenigstens ein Übergang zwischen einem Förderband (38, 40, 42) des Zwischenförderers (3) und dem sich anschließenden Förderband (48, 50, 52) des Abförderers (4) sowie wenigstens ein weiterer Übergang zwischen einem anderen Förderband (39, 41) des Zwischenförderers (3) und dem sich anschließenden Förderband (49, 51) des Abförderers (4) in Förderrichtung (A) versetzt sind, und daß an jedem Übergang ein Übergangsblech (55) vorgesehen ist, dessen Breite quer zur Förderrichtung (A) in etwa gleich der Breite der aneinander anschließenden Förderbänder (38-42), 48-52) des Zwischenförderers (3) und des Abförderers (4) ist, wobei vorzugsweise die Breite der aneinander anschließenden Förderbänder (38-42, 48-52) des Zwischenförderers (3) und des Abförderers (4) höchstens gleich, bevorzugt jedoch kleiner ist als der Durchmesser der Bodenfläche der kleinsten zu verarbeitenden Flaschen (1, 1′, 1″).

16. Anordnung nach Anspruch 15, dadurch gekennzeichnet, daß die Spurbreite bzw. die Breite der Gasse des Zwischenförderers (3) in einem in Förderrrichtung (A) vor dem Anschlußbereich (43) liegenden Bereich kleiner als die Spurbreite des Zuförderers, jedoch größer ist als die Spurbreite des Abförderers (4), und daß sich die Breite der Gasse des Zwischenförderers (3) im Anschlußbereich (43) auf diejenige Spurbreite verengt, die der Abförderer (4) in seinem Eingangsbereich aufweist.

17. Anordnung nach Anspruch 15 oder 16, dadurch gekennzeichnet, daß die Übergangsbleche (55) etwas unter dem Niveau der Standflächen des Zwischenförderers (3) und des Abförderers (4) liegen.

## Claims

1. Arrangement, for reshaping an inwardly conveyed multi-track bottle stream into a single-track bottle stream to be conveyed outwardly, with several endless circulating conveyor belts, which serve by their upper lengths each as respective support surfaces for the bottles and form a multi-track inward conveyor (2) displaying an outer guide railing and, adjoining thereat in conveying direction, an intermediate conveyor (3) with track width reducing in conveying direction as well as an outward conveyor (4) displaying an outer guide railing, wherein the effective conveying speed of the intermediate conveyor is greater than the effective conveying speed of the inward conveyor and the effective conveying speed of the outward conveyor is greater than the effective conveying speed of the intermediate conveyor and wherein at least one first metal transition plate, preferably in the shape of a metal slide plate, is provided in the connecting region between the inward conveyor and the intermediate conveyor and at least one second metal transition plate is provided in the connecting region to the outward conveyor, wherein the inward conveyor, the intermediate conveyor and the outward conveyor are each formed by their own conveyor belts, characterised thereby, that the intermediate conveyor (3) adjoins the inward conveyor (2) in the same track in conveying direction (A) and the outward conveyor (4) adjoins the intermediate conveyor (3) in the same track in conveying direction (A), that the outward conveyor (4), which displays a reducing track width in conveying direction (A), is constructed to be at least two-tracked in its entry region adjoining the intermediate conveyor (3), that the at least one second metal transition plate (31, 55) is provided in the connecting region between the intermediate conveyor (3) and the outward conveyor (4), that the intermediate conveyor (3) at both sides displays outer guide railings (14, 15, 15′), which between them bound a lane which reaches from the inward conveyor (2) to the outward conveyor (4) and narrows in funnel shape in conveying direction (A), wherein this lane displays the track width of the inward conveyor (2) in the connecting region between the inward conveyor (2) and the intermediate conveyor (3) and the track width of the outward conveyor (4) already before the connecting region to the outward conveyor (4), and that at least the inward conveyor (2) and the funnel-like region of the lane of the intermediate conveyor (3) display horizontally extending support surfaces.

2. Arrangement according to claim 1, characterised thereby, that the at least one second metal transition plate (31, 55) is a metal slide plate which lies at about the same level as the support surfaces of the intermediate conveyor (3) and the outward conveyor (4).

3. Arrangement according to claim 1 or 2, characterised thereby, that the outward conveyor (4) displays at least two conveyor belts (19, 48 to 52), which are arranged one beside the other transversely to the conveying direction (A) and adjoin flush one against the other transversely to the conveying direction (A) at least by their upper lengths.

4. Arrangement according to one of the claims 1 to 3, characterised thereby, that the track width of the inward conveyor (2) is equal to twice or another greater integral multiple of that track width which the outward conveyor (4) displays in its entry region adjoining the intermediate conveyor (3).

5. Arrangement according to claim 3 and 4, characterised thereby, that the inward conveyor (2) is formed of several conveyor belts (5), which are arranged one beside the other transversely to the conveying direction (A) and adjoin flush one against the other transversely to the conveying direction (A) at least by their upper lengths, and that the number of the conveyor belts (5) of the inward conveyor (2) is equal to an integral multiple of two.

6. Arrangement according to one of the claims 1 to 5, characterised thereby, that the number of the conveyor belts (10) of the intermediate conveyor (3) is equal to or smaller than the number of the conveyor belts (5) of the inward conveyor (2).

7. Arrangement according to one of the claims 1 to 6, characterised thereby, that in the case of an intermediate conveyor (3), which displays several conveyor belts (10), which are arranged one beside the other transversely to the conveying direction (A) and adjoin flush one against the other transversely to the conveying direction (A) at least by their upper lengths, at least one conveyor belt (10), which is provided at the centre line – extending in conveying direction (A) – of the intermediate conveyor (3), is prolonged in conveying direction (A) beyond the remaining conveyor belts (10) of the intermediate conveyor (3) and that this at least one prolonged conveyor belt (10) forms the support surface of the intermediate conveyor (3) in a further region of the lane, which adjoins the region of the lane narrowing in the manner of a funnel and which is adjoined by the outward conveyor (4), wherein preferably for equal width of the conveyor belts of the intermediate conveyor (3) and of the outward conveyor (4), the number of the prolonged conveyor belts (10) forming the support surface of the intermediate conveyor (3) in the further region of the lane is equal to the number of the conveyor belts (19), which the outward conveyor (4) displays in its entry region adjoining the intermediate conveyor (3).

8. Arrangement according to one of the claims 1 to 7, characterised thereby, that the outward conveyor (4) displays a rigid outer guide railing (23) extending rectilinearly in conveying direction (A) at one longitudinal side and a second outer guide railing (24, 25, 56, 56′) at the other longitudinal side and extending at least in a partial region in conveying direction (A) as well as at the same time transversely to the conveying direction (A) in such a manner that the track width reducing in conveying direction (A) results for the outward conveyor (4), wherein this partial region of the guide railing is constructed to be elastic at least in a partial section (25, 56′), wherein preferably the support surface of the outward conveyor (4) is inclined relative to an horizontal plane transversely to the conveying direction (A) at least in the region of reducing track width in such a manner and the support surface of the outward conveyor (4) at the first guide railing (23) displays a somewhat lower level than at the second guide railing (24, 25, 56, 56′) and/or wherein preferably the support surface of the intermediate conveyor (3) is inclined relative to the horizontal transversely to the conveying direction (A) in the further region of the lane over a partial length reaching to that end of the intermediate conveyor (3), which is rearward in conveying direction (A), and the support surfaces of the intermediate conveyor (3) and of the outward conveyor (4) at least in the connecting region between the intermediate conveyor (3) and the outward conveyor (4) display the same inclination relative to the horizontal transversely to the conveying direction (A).

9. Arrangement according to one of the claims 1 to 8, characterised thereby, that at least one of both the outer guide railings (14, 15) of the intermediate conveyor (3) is constructed to be elastic at least in that region of the lane of the intermediate conveyor (3), which narrows in the manner of a funnel.

10. Arrangement according to one of the claims 1 to 9, characterised thereby, that the intermediate conveyor (3) adjoins the outward conveyor (4) by way of a preferably curved conveying path (34) and that the second metal transition plate (31) is provided at the transition between that end of this conveying path (34), which is rearward in conveying direction (A), and that end of the outward conveyor (4), which is forward in conveying direction (A).

11. Arrangement according to one of the claims 1 to 10, characterised by guide railings (9, 14, 15, 23, 24), which are settable transversely to the conveying direction (A) at the inward conveyor (2) and/or the intermediate conveyor (3) and/or the outward conveyor (4).

12. Arrangement according to one of the claims 1 to 11, characterised thereby, that the edge, which is rearward in conveying direction (A), of at least one metal transition plate (27, 31, 55) extends perpendicularly to the conveying direction (A).

13. Arrangement according to one of the claims 1 to 12, characterised thereby, that the edge (29, 30; 29′, 30′; 33), which is rearward in conveying direction (A), of at least one metal transition plate (27, 31) constructed as metal slide plate displays at least one portion which extends obliquely to the conveying direction (A), i.e. includes an angle smaller than 30° and preferably an angle of 25° with an axis perpendicular to the conveying direction (A), wherein preferably the edge, which is rearward in conveying direction (A), of at least one metal transition plate (27) constructed as metal slide plate displays at least two portions (29, 30, 29′, 30′), which preferably display the same length and extend obliquely to the conveying direction in different directions and namely preferably in such a manner that the edge, which is rearward in conveying direction (A), of this at least one metal transition plate (27) displays a roofslope-like or a V-shaped course through the portions (29, 30, 29′, 30′), wherein both the portions (29, 30; 29′, 30′) each preferably include the same angle with the axis extending perpendicularly to the conveying direction (A).

14. Arrangement according to one or more of the claims 7 to 13, characterised thereby, that the at least one conveyor belt, which is prolonged beyond the remaining conveyor belts (10) and adjoined by the outward conveyor (4), consists of at least one remaining conveyor belt (10) in the region of the remaining conveyor belts (10) and of a further metering belt (35) in the region prolonged beyond the remaining conveyor belts (10), wherein the horizontal-

ly extending support surface (16) of the intermediate conveyor (3) extends at least into the connecting region of further metering belt (35) to the at least one further conveyor belt (10) and a higher conveying speed is provided for all conveyor belts (10) of the intermediate conveyor (3) than for the further metering belt (35), which displays a lower conveying speed than the outward conveyor (4).

15. Arrangement according to one of the claims 3 to 14, characterised thereby, that in the case of an intermediate conveyor (3), which displays several conveyor belts (10, 38, to 42), the at least two conveyor belts (48 to 52) of the outward conveyor (4) adjoin at least two conveyor belts (38, 42) of the intermediate conveyor (3), preferably at two conveyor belts (38, 42) provided in the middle region of the intermediate conveyor (3) in the connecting region (43) between the intermediate conveyor (3) and the outward conveyor (4), that at least one transition between a conveyor belt (38, 40, 42) of the intermediate conveyor (3) and the adjoining conveyor belt (48, 50, 52) of the outward conveyor (4) as well as at least one further transition between another conveyor belt (39, 41) of the intermediate conveyor (3) and the adjoining conveyor belt (49, 51) of the outward conveyor (4) are displaced in conveying direction (A) and that a metal transition plate (55), the width of which transversely to the conveying direction (A) is about equal to the width of the mutually adjoining conveyor belts (38 to 42, 48 to 52) of the intermediate conveyor (3) and of the outward conveyor (4), is provided at each transition, wherein the width of the mutually adjoining conveyor belts (38 to 42, 48 to 52) of the intermediate conveyor (3) and of the outward conveyor (4) is preferably at most equal to, preferably however smaller than the diameter of the base surface of the smallest bottles (1, 1', 1'') to be processed.

16. Arrangement according to claim 15, characterised thereby, that the track width or the width of the lane of the intermediate conveyor (3) is smaller in a region lying in front of the connecting region (43) in conveying direction (A) than the track width of the inward conveyor (2), however greater than the track width of the outward conveyor (4) and that the width of the lane of the intermediate conveyor (3) narrows in the connecting region (43) to that track width which the outward conveyor (4) displays in its entry region.

17. Arrangement according to claim 15 or 16, characterised thereby, that the metal transition plates (55) lie somewhat below the level of the support surfaces of the intermediate conveyor (3) and of the outward conveyor (4).

**Revendications**

1. Dispositif de transformation d'un courant de bouteilles arrivant sur plusieurs files en un courant sortant sur une seule file, comportant un certain nombre de bandes transporteuses qui tournent sans fin, dont les brins supérieurs servent de surfaces portantes pour les bouteilles et qui forment un convoyeur d'alimentation (2) à plusieurs voies, comportant un rail extérieur de guidage, un convoyeur intermédiaire (3) qui le suit et présente une largeur de voie réduite dans le sens de l'avance, ainsi qu'un convoyeur de sortie (4) comportant un rail de guidage extérieur, la vitesse effective d'avance de ce convoyeur intermédiaire étant supérieure à celle du convoyeur d'alimentation et la vitesse effective d'avance du convoyeur de sortie étant supérieure à celle dudit convoyeur intermédiaire, une première plaque de transfert au moins, avantageusement une plaque de glissement, étant disposée dans la zone de jonction entre le convoyeur d'alimentation et le convoyeur intermédiaire, une seconde plaque de transfert étant disposée dans la zone de jonction au convoyeur de sortie, ce convoyeur d'alimentation, ce convoyeur intermédiaire et ce convoyeur de sortie étant formés chacun de propres bandes transporteuses, dispositif caractérisé en ce que, dans le sens (A) de l'avance, le convoyeur intermédiaire (3) se raccorde avec la même largeur de voie au convoyeur d'alimentation (2) et le convoyeur de sortie se raccorde/avec la même largeur de voie, à ce convoyeur intermédiaire (3); en ce que le convoyeur de sortie (4), dont la largeur de voie diminue dans le sens (A) de l'avance, comporte au moins deux voies à son entrée qui se raccorde au convoyeur intermédiaire (3); en ce qu'il y a au moins une seconde plaque (31 ; 55) de transfert dans la zone de jonction (43) entre le convoyeur intermédiaire (3) et le convoyeur de sortie (4); en ce que ce convoyeur intermédiaire (3) porte de chaque côté des rails extérieurs (14, 15, 15') de guidage délimitant entre eux un couloir qui se rétrécit en entonnoir dans le sens (A) de l'avance, du convoyeur d'alimentation (2) au convoyeur de sortie (4), ce couloir ayant, dans la zone de jonction entre le convoyeur d'alimentation (2) et le convoyeur intermédiaire (3), la largeur de voie de ce convoyeur d'alimentation (2) et ayant, déjà avant la zone de jonction (43) avec le convoyeur de sortie (4), la largeur de voie de ce convoyeur de sortie (4); et en ce qu'au moins le convoyeur d'alimentation (2) et la partie rétrécie en entonnoir du couloir du convoyeur intermédiaire (3) comportent des surfaces portantes horizontales.

2. Dispositif selon la revendication 1, caractérisé en ce que la seconde plaque (31, 55) de transfert présente, en au moins un exemplaire, une plaque de glissement qui est sensiblement au même niveau que les surfaces portantes du convoyeur intermédiaire (3) et du convoyeur de sortie (4).

3. Dispositif selon la revendication 1 ou 2, caractérisé en ce que le convoyeur de sortie (4) comporte au moins deux bandes transporteuses (19; 48–52) qui, perpendiculairement au sens (A) de l'avance, sont disposées l'une à côté de l'autre et dont les brins supérieurs au moins sont jointifs, perpendiculairement à ce sens (A) d'avance.

4. Dispositif selon l'une des revendications 1 à 3, caractérisé en ce que la largeur de voie du convoyeur d'alimentation (2) est égale au double, ou à un autre multiple entier encore plus grand, de celle du convoyeur de sortie (4) à son entrée raccordée au convoyeur intermédiaire (3).

5. Dispositif selon les revendications 3 et 4, caractérisé en ce que le convoyeur d'alimentation (2) est formé de plusieurs bandes transporteuses (5) qui, perpendiculairement au sens (A) de l'avance, sont disposées côte à côte et dont les brins supérieurs au moins sont jointifs, et en ce que le nombre de bandes (5) de ce convoyeur d'alimentation (2) est un multiple entier de deux.

6. Dispositif selon l'une des revendications 1 à 5, caractérisé en ce que le nombre de bandes transporteuses (10) du convoyeur intermédiaire (3) est égal ou inférieur au nombre de bandes transporteuses (5) du convoyeur d'alimentation (2).

7. Dispositif selon l'une des revendications 1 à 6, caractérisé en ce que, dans un convoyeur intermédiaire (3) qui comporte plusieurs bandes transporteuses (10), qui sont disposées côte à côte et dont les brins supérieurs au moins sont jointifs, perpendiculairement au sens (A) de l'avance, une bande (10) au moins, disposée dans l'axe longitudinal de ce convoyeur intermédiaire (3), est prolongée au-delà des autres bandes (10) dudit convoyeur (3); et en ce que cette bande (10) au moins, prolongée, constitue la surface portante de ce convoyeur intermédiaire (3) dans la partie du couloir qui suit, dans le sens (A) de l'avance, la partie de ce couloir rétrécie en entonnoir et qui se raccorde au convoyeur de sortie (4) et avantageusement pour une même largeur des bandes transporteuses du transporteur intermédiaire (3) et du transporteur de sortie (4), le nombre des bandes (10) prolongées qui forment cette surface portante du convoyeur intermédiaire (3) dans cette partie suivante du couloir étant avantageusement égal au nombre des bandes (19) que comporte le convoyeur de sortie (4) à son entrée raccordée à ce convoyeur intermédiaire (3).

8. Dispositif selon l'une des revendications 1 à 7, caractérisé en ce que le convoyeur de sortie (4) comporte, sur un de ses grands côtés, un rail extérieur (23) de guidage rigide et rectiligne, orienté dans le sens (A) de l'avance, et sur l'autre grand côté, un second rail extérieur (24, 25; 56, 56') de guidage qui est orienté, au moins en partie, à la fois dans le sens (A) de l'avance et transversalement à ce sens (A), de façon à créer la réduction, dans ledit sens (A), de la largeur de voie de ce convoyeur de sortie (4), cette partie du (second) rail étant élastique, au moins sur un segment (25″, 56'), la surface portante dudit convoyeur de sortie (4) étant avantageusement inclinée, transversalement au sens (A) de l'avance, par rapport à un plan horizontal, au moins dans la zone où la largeur de voie diminue et étant, près du premier rail (23) à une hauteur un plus faible que près du second rail (24, 25, 56, 56'), et/ou la surface portante du convoyeur intermédiaire (3) étant avantageusement inclinée sur l'horizontale dans la partie suivante précitée du couloir et jusqu'à l'extrémité postérieure, dans le sens (A) de l'avance, de ce convoyeur intermédiaire (3), et ces surfaces portantes des deux convoyeurs (3, 4) ayant la même inclinaison sur l'horizontale au moins dans la zone de jonction entre ce convoyeur intermédiaire (3) et ce convoyeur de sortie (4).

9. Dispositif selon l'une des revendications 1 à 8, caractérisé en ce que l'un au moins des deux rails extérieurs de guidage (14, 15) du convoyeur intermédiaire (3) est élastique, au moins dans la partie du couloir de ce convoyeur intermédiaire (3) qui se rétrécit en entonnoir.

10. Dispositif selon l'une des revendications 1 à 9, caractérisé en ce que le convoyeur intermédiaire (3) est raccordé au convoyeur de sortie (4) par une voie de transport (34) avantageusement courbe; et en ce que la seconde plaque de transfert (31) est disposée à la jonction entre l'extrémité postérieure, dans le sens (A) de l'avance, de cette voie (34) et l'extrémité antérieure de ce convoyeur de sortie (4).

11. Dispositif selon l'une des revendications 1 à 10, caractérisé en ce qu'il comporte des rails (9, 14, 15, 23, 24) de guidage réglables transversalement au sens (A) de l'avance, sur le convoyeur d'alimentation (2), et/ou sur le convoyeur intermédiaire (3) et/ou le convoyeur de sortie (4).

12. Dispositif selon l'une des revendications 1 à 11, caractérisé en ce que le bord postérieur, dans le sens (A) de l'avance, d'au moins une plaque (27, 31, 55) de transfert est perpendiculiaire à ce sens (A) de l'avance.

13. Dispositif selon l'une des revendications 1 à 12, caractérisé en ce que le bord postérieur (29, 30; 29', 30'; 33), dans le sens (A) de l'avance, d'au moins une plaque (27, 31) de transfert constituant une plaque de glissement, comporte au moins un tronçon orienté obliquement par rapport à ce sens (A) de l'avance, c'est-à-dire fait avec un axe perpendiculaire audit sens (A) un angle inférieur à 30°, avantageusement un angle de 25°; en ce que le bord postérieur (dans le sens A) d'au moins une (27) de ces plaques constituant des plaques de glissement comporte au moins deux tronçons (29, 30; 29', 30'), qui ont de préférence la même longueur et sont orientés obliquement, dans des directions différentes par rapport au sens (A) de l'avance, avantageusement de manière que ce bord postérieur d'au moins une plaque (27) de transfert présente, grâce à ces tronçons (29, 30; 29', 30') une forme en toit incliné ou en V, les deux tronçons (29, 30; 29', 30' faisant de préférence le même angle avec un axe perpendiculaire à ce sens (A) de l'avance.

14. Dispositif selon l'une ou plusieurs des revendications 7 à 13, caractérisé en ce que l'une au moins des bandes transporteuses prolongées au-delà des autres bandes (10) à laquelle le convoyeur de sortie (4) se raccorde, est composée, à l'emplacement de ces autres bandes (10), d'au moins l'une de ces autres bandes (10) et, dans la zone prolongée au-delà desdites autres bandes (10), d'une bande régulatrice (35) suivante, la surface (16) horizontale du convoyeur intermédiaire (3) s'étendant au moins jusqu'à la zone de jonction de cette bande régulatrice (35) à la ou aux autres bandes prolongées, toutes les bandes (10) de ce convoyeur intermédiaire (3) ayant une vitesse plus grande que la bande régulatrice (35) qui a une vitesse d'avance plus faible que le convoyeur de sortie (4).

15. Dispositif selon l'une des revendications 3 à 14, caractérisé en ce que, dans un convoyeur intermédiaire (3) qui comporte plusieurs bandes transporteuses (10, 38–42), les deux bandes transporteuses (48, 52) au moins du convoyeur de sortie (4) se raccordant à au moins deux bandes (38, 42) de ce convoyeur intermédiaire (3), avantageusement à deux bandes (38, 42) disposées dans la partie centrale dudit convoyeur intermédiaire (3), dans la zone de jonction (43) entre ce dernier et le convoyeur de sortie ; en ce qu'au moins un point de passage entre une bande (38, 40, 42) du convoyeur intermédiaire (3) et la bande (48, 50, 52) qui s'y raccorde du convoyeur de sortie (4), ainsi qu'au moins un autre point de passage entre une autre bande (39, 41) du convoyeur intermédiaire (3) et la bande (49, 51) qui s'y raccorde du convoyeur de sortie (4) sont décalés dans le sens (A) de l'avance; et en ce qu'il y a, à chacun de ces points de passage, une plaque de transfert (55) dont la largeur, transversalement au sens (A) de l'avance, est sensiblement égale à celle des bandes (38–42, 48–52) raccordées entre elles du convoyeur intermédiaire (3) et du convoyeur de sortie (4); cette largeur des bandes (38–42; 48–52) qui se raccordent respectivement étant au plus égale, mais avantageusement inférieure, au diamètre du fond des plus petites bouteilles (1, 1', 1'') traitées.

16. Dispositif selon la revendication 15, caractérisé en ce que la largeur de la voie, ou la largeur du couloir du convoyeur intermédiaire (3) en un point qui se trouve, dans le sens (A) de l'avance, en amont de la zone de jonction (43), est inférieure à la largeur de voie du convoyeur d'alimentation (2), mais supérieure à la largeur de voie du convoyeur de sortie (4); et en ce que la largeur du couloir du convoyeur intermédiaire (3) dans la zone de jonction (43) se rétrécit à la largeur de voie du convoyeur de sortie (4) à son entrée.

17. Dispositif selon la revendication 15 ou 16, caractérisé en ce que les plaques de transfert (55) sont disposées un peu en-dessous du niveau des surfaces portantes du convoyeur intermédiaire (3) du convoyeur de sortie (4).

Fig. 1

Fig. 6

EP 0 252 461 B1

Fig.7

Fig. 3

Fig. 4

Fig. 2

Fig. 5

EP 0 252 461 B1

Fig. 8

EP 0 252 461 B1